# EUROPEAN PATENT APPLICATION

(11) **EP 0 991 033 A2**
(43) Date of publication of application: **05.04.2000**
(21) Application number: 99117108.3
(22) Date of filing: 28.08.1999
(51) Int. Cl.: G07F 7/10

(54) **Simplified use of smart cards**

(30) Priority: 02.10.1998 DE 19845582
(71) Applicant: International Business Machines Corporation, Armonk, NY 10504 (US)
(72) Inventor: Schäck, Thomas, 77855 Achern (DE)
(74) Representative: Rach, Werner, Dr.

(57) **Abstract**

The invention refers to a smart card with stored information which is used in executing a computer program stored outside the smart card (card application) and a procedure for operating such a card application. The stored information contains control information for the start mode of the card application. After inserting the smart card into a specific card reader, the application which is intended for use with this smart card is loaded and started automatically in a terminal. In this way the user-friendliness of the smart card is increased.

## Description

The invention refers to a smart card with stored information which is used in the execution of a computer program (card application) outside the smart card, and a procedure for operating such a card application.

Cards consisting of, amongst other things, a microprocessor (chip) and memory units are already known. They are also known as smart cards. This type of card is used together with devices possessing a card reader. These terminals can be, for example, personal computers or network computers (NCs).

In order that the card application can be executed, it is necessary that it is explicitly started by the user. The starting is carried out, for example, by entering a corresponding command using a computer keyboard or by clicking on corresponding icons on a graphic user interface with a computer mouse. If the card user uses a terminal unknown to him/her or a terminal which only has restricted facilities for entering start commands, the starting of card applications can be difficult.

If the started card application requires a smart card to execute certain functions, the user is requested to insert the corresponding smart card in a smart card reader for this purpose. It is also necessary that the user inserts into the reader exactly that smart card which is supported by the started application. After the smart card has been inserted, the card application can use the smart card.

A procedure is known where a smart card is used with an NC in order to identify the card user in logging on for a session. In this, information is read from the smart card by the NC and transmitted to a server. This then makes available to the user a selection of computer programs which are permitted for use by the user. The computer programs can be started up manually or automatically. If one of the started computer programs is a card application, then the user must insert a smart card which supports the card application in order to be able to use the smart card.

In the previous use of smart cards, it is a disadvantage that the user of a smart card cannot restrict himself exclusively to the use of the smart card and the operation of a card application. Moreover, the user of a smart card must involve himself with additional questions which are not linked to the actual use of the smart card and are therefore not of great interest to the user. For example, he must know the card application which works together with his smart card. In addition he must know how to start this card application. If the card application is not yet loaded, he must also know where the application is located, etc.

It is the task of the invention to simplify the use of smart cards and to improve the operability of devices and programs which use smart cards.

In accordance with the invention, this task is solved by the features of claims 1 and 8.

There is data in the memory of the smart card which can be read out and used by a card application, and/or a computer program which can be used by a card application. Each stored set of data in the smart card memory or each computer program in the smart card memory has an application identifier allocated to it. In accordance with the invention presented, the smart card additionally receives a statement (control information) on the start mode of each card application which can use a set of data described by the application identifiers and stored on the smart card and/or a computer program stored on the smart card. The application identifier and the statements (control information) on the start mode are parts of a card configuration.

The computer programs stored on the smart card are preferably Java applications (Java applets). Data and computer programs can be filed simultaneously in the smart card memory.

A background program is executed in a terminal which waits for the insertion of a smart card into a smart card reader. After inserting a smart card into the smart card reader, the background program reads the card configuration, i.e. the application identifier and control information, from the smart card.

In addition, the background program reads statements on that application which the data or Java applets can use on the smart card such as their name and the location of the card application. These statements are also located either in the card configuration on the smart card or the card configuration is divided into several parts where at least the application identifier and control information are in the part filed on the smart card, whereas the remaining parts of the card configuration are located in a configuration file outside the smart card.

Then the background program automatically loads and starts the card application, which the data or Java applets use on the smart card, as long as the control information ("AUTOSTART") is allocated to the card application in the card configuration on the smart card.

Finally, the data or Java applets on the inserted smart card can be used by the started card application.

The use of the invention presented allows exactly that card application to be loaded and started in a terminal which can use information from the memory of a smart card previously loaded into the smart card reader. The card user must simply insert the smart card into the terminal and operate the card application which starts automatically It is no longer necessary for the card user to know how that card application which supports the smart card being used has been started. Also, the card user no longer has to insert the intended smart card into the reader after the start of the card application as this is already in the reader. The card application to be started depends solely on the smart card inserted by the card user into the reader. For example, a first and a second card application are automatically started for a first smart card, whilst a first and a third application are automatically started for a second smart card. In this way, a terminal can work, for example, as an automatic bank when used with the first smart card, whilst the same terminal can take over, for example, the function of an automatic ticket dispenser when used with a second card.

The invention is described in more detail in the following using a preferred embodiment. The figures show:
- Fig. 1: a schematic representation of the procedure according to the current state of technology
- Fig. 2: a schematic representation of the procedure in accordance with the invention presented
- Fig. 3: a schematic representation of the card configuration on a Java card in accordance with a first embodiment
- Fig. 4: a schematic representation of the card configuration on a file oriented smart card in accordance with a second embodiment
- Fig. 5: a schematic representation of the card configuration on a file oriented smart card in accordance with a third embodiment

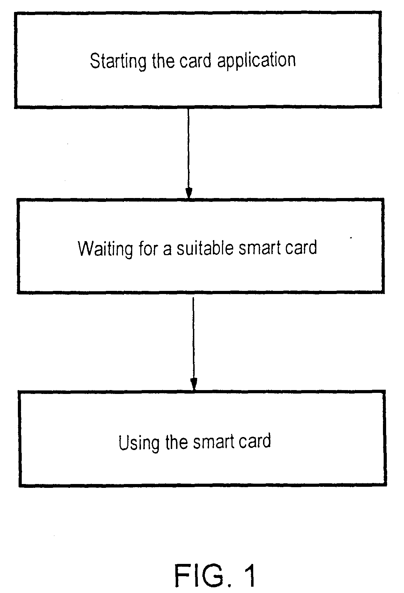

According to the current state of technology, the smart card user must himself select, from different applications available, the card application used by the smart card which he is using, and start it as described in Figure 1. The selection and starting occurs, for example using a graphic user interface. After the card application is started, it waits for the insertion of a supported smart card. After such a smart card has been inserted by the user into a corresponding smart card reader, the card application can use the smart card.

In the following, preferred embodiments of the invention presented are described in more detail:

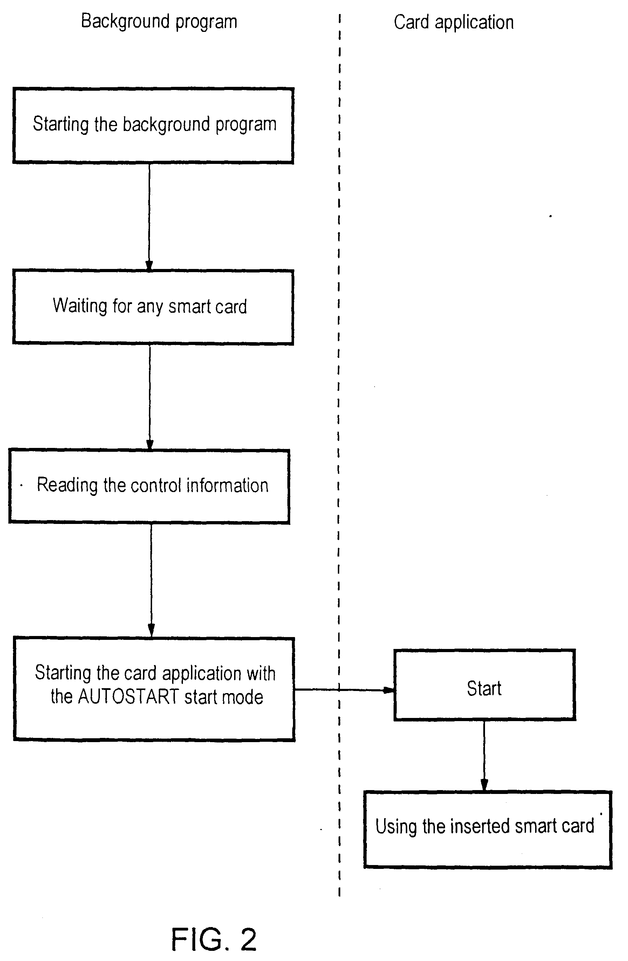

As shown in Figure 2, a background program is executed in a terminal. The background program is an independent program in a terminal, independent of other card applications. It waits for the insertion of any smart card into the reader. In the preferred embodiment of the invention presented, the background program is implemented based on the OpenCard Framework (OpenCard Framework 1.1, White Paper, http://www.opencard.org). The background program can, however, also be part of another program which runs in the background, such as the operating system of the terminal. The background program can also be realised through other means. In the preferred embodiment, the background program is automatically started on the start of the terminal system. However, it can also be started manually.

In the preferred embodiment, the terminal is a PC with a smart card reader. However, devices such as NCs and set-top boxes could also be used, i.e. devices which are used for decoding encoded television images and other applications such as bank business, or other devices with smart card readers. In the preferred embodiment, a Java platform is used as a terminal.

The smart card memory contains data which can be used by at least one card application and/or at least one computer program which can be used by at least one card application. The computer program in the preferred embodiment is a Java applet. In addition, there is a smart card configuration in the smart card memory.

Once the insertion of a smart card into the card reader has been ascertained, the card configuration on the smart card is read automatically by the background program.

Previously, the type of smart card and the form of data transmission were established when necessary. This is carried out automatically in a known manner by the background program. For example, information which is located on the smart card (e.g. "Answer to reset", ASR) is read for this purpose.

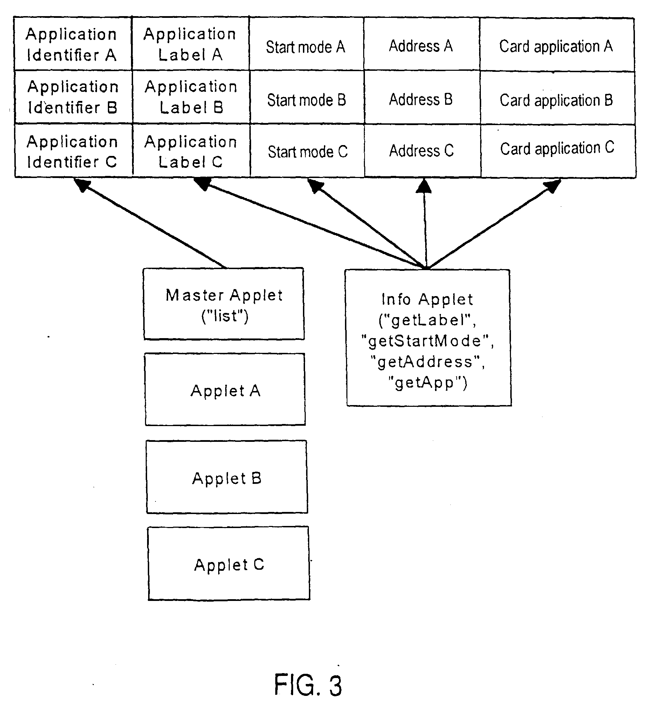

As shown in Figure 3, the card configuration on the smart card consists of at least the following components:
- an application identifier of the data used by a card application or at least one of the Java applets used by the card application in the smart card memory and
- a statement (control information) on the start mode of a card application which can use the data or Java applets established by the above identifier.

In addition to these statements, the background program reads the following information which can be located both in the card configuration on the smart card, as in the preferred embodiment, as well as in a second part of the card configuration in one or several configuration files outside the smart card:
- a statement ("application label") on the name of the data or Java applets used by the card application, e.g. "cash card",
- a statement on the address from which the card application using the data or Java applets can be loaded into the main memory of the terminal and
- a statement on which card application or applications is/are to be started for the use of data or Java applets identified in the application identifier, e.g. transfer.exe.

For the application identifier, a clear identifier to ISO 7816-5 (International Standard, Identification cards - Integrated circuit cards with contacts) is used. An example of such an identifier is "D27600002200000091".

The address held in the card configuration in the preferred embodiment is a URL (uniform resource locator), this being an address in a format which is preferred on the Internet, such as http://www.xbank.com/apps. However, any other address format can be used.

The control information contains a statement on the start mode of a card application. This statement has the value AUTOSTART when the card application is to be started automatically, or START_AFTER_SELECTION if the card application is to be started by the user, or NEVER_START when the card application is deactivated. The content of the control information is not, however, restricted to these examples. The control information can contain any other information on the start of the card application.

If several application identifiers are filed in the card configuration, i.e. if data or Java applets for several card applications are located on the smart card, then the card configuration contains a set of statements on control information, application label, address and name of the card application for each application identifier.

The data structure for filing the card configuration is preferably applied by the smart card manufacturer. For example, data can be filed in the card configuration at the time of the data structures being defined on the smart card or at a later point in time.

After the background program has read the card configuration, it loads the card applications which are given in the card configuration into the terminal memory whereby the card application is loaded from that address stated in the card configuration which is stated for the respective card application. Addresses can be local or remote addresses (e.g. local hard disk, Internet, ...). To load the card application, the background program has access to data and/or program files in these addresses. The background program particularly has access to computer networks such as the Internet.

The background program then automatically starts the card application whose start mode is defined as AUTOSTART in the control information. The card application started in this way can use the smart card already inserted into the card reader. If the start mode START_AFTER_SELECTION is allocated to the card application, then after loading the card application from the corresponding address, no automatic start can take place. Instead, this card application can only be started if selected by the card user. To do this, the user is offered the application label of the data or Java applets for selection, for example in the form of a graphic menu.

If the start mode of the card application is NEVER_START, then the card application is neither started automatically nor offered to the user for selection.

An additional embodiment has the card applications not identified by the start mode AUTOSTART not being loaded into the terminal until the user has selected it.

An additional embodiment has at least one card application being continually located in the memory of the terminal and therefore after a corresponding smart card has been inserted into the reader it does not have to be loaded from an address but can be used immediately.

In the first preferred embodiment, the smart card is a Java card used in conjunction with a Java platform.

Figure 3 shows the card configuration for this embodiment.

Java applets are used here instead of a file in which the card configuration is filed for file oriented smart cards. There is a master applet on the smart card which, amongst other things, is responsible for the creation and deletion of applications on the card, and in addition there is an info applet and at least one application applet which can be used through a card application.

An APDU (application protocol data unit) command such as "LIST" is sent to the master applet through the background program whereby the master applet causes a list of application identifiers of all application applets on the card to be sent back to the background program in the form of an APDU response. After the background program has received all the application identifiers of all the application applets, it can then receive the missing information (start mode, address, ...) using the info applet. The information applet replies back to the background program in response to a corresponding command from the background program such as "getLabel" with the control information which belongs to the given identifier of an application applet, the address of the card application to be started as well as the name of the card application to be started.

Alternatively, the functionality of the info applet can be integrated into the master applet. Then a command, for example "getInfo", can send back all the information to the background program which is necessary for starting the card application. In the preferred embodiment, with a Java card as the smart card and a Java platform as the terminal, the card application to be started is a Java application.

The statement contained in the card configuration on the card application to be started then contains information on which Java class has to be started.

In a preferred embodiment, the Java class is an "ApplicationFactory" class, i.e. a class which joins together applications from different Java components. In this case, the background program loads the ApplicationFactory from the corresponding stated address, starts the ApplicationFactory and issues to it both the identifier of at least one of those Java applets which are located in the smart card memory and which the Java application to be created can use, as well as the ATR of the smart card as parameters. The ApplicationFactory uses these parameters in order to create the corresponding card application, here a Java application, and to adapt to the specially used card type. The ApplicationFactory, as well as the Java applets used as components of the combined Java application, are preferably located on a common computer on the Internet. To load the applet, the background program has access to local and remote memories, such as the Internet. The combined card application is started automatically by the background program as long as the start mode is AUTOSTART.

Instead of Java applets in a file oriented smart card, files can be used to file the card configuration in it.

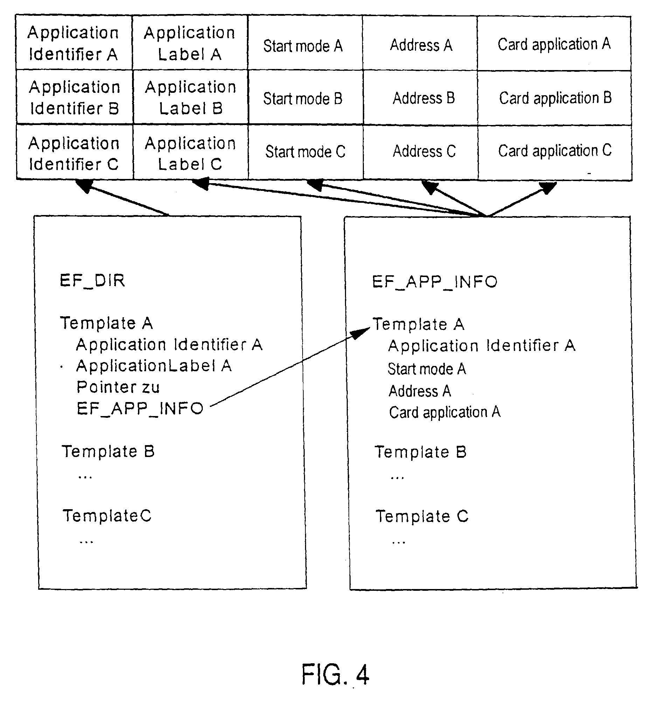

Figure 4 shows the representation of the card configuration on a file oriented smart card in accordance with a second embodiment of the invention presented.

In it, the card configuration is located in two separate files on the smart card. In a preferred embodiment, the application identifier and application label are filed in the first file. In the first file (EF_DIR) are additionally filed pointers to the parts of the card configuration which are located in a second file. In the second file (EF_APP_INFO) are filed additional statements on the start mode, address and name of the card application to be started.

This embodiment preferably uses the Europay-Mastercard-Visa (EMV) standard (EMV '96 Version 3.0, 30^{th} June 1996, Integrated Circuit Card Specification for Payment Systems) for the description of the first file. The first file then conforms to the file EF_DIR defined in the EMV standard.

The statements in the card configuration are filed as templates in the sense of the EMV standard in a tag length value (TLV) structure conforming to ISO 8825 (Information Processing Systems - Open System Interconnection - Specification of Basic Encoding Rules for Abstract Syntax Notation One (ASN.1)).

In accordance with the EMV standard, the syntax of the application identifier and application label is known. In addition, for the control information, the address statement and the statement on the card application to be started, a syntax is used which is coded in accordance with ISO 8825 in a TLV structure. In this, the lengths of the addresses and the names of the Java classes are preferably variable whereas the length of the start mode is 1 Byte.

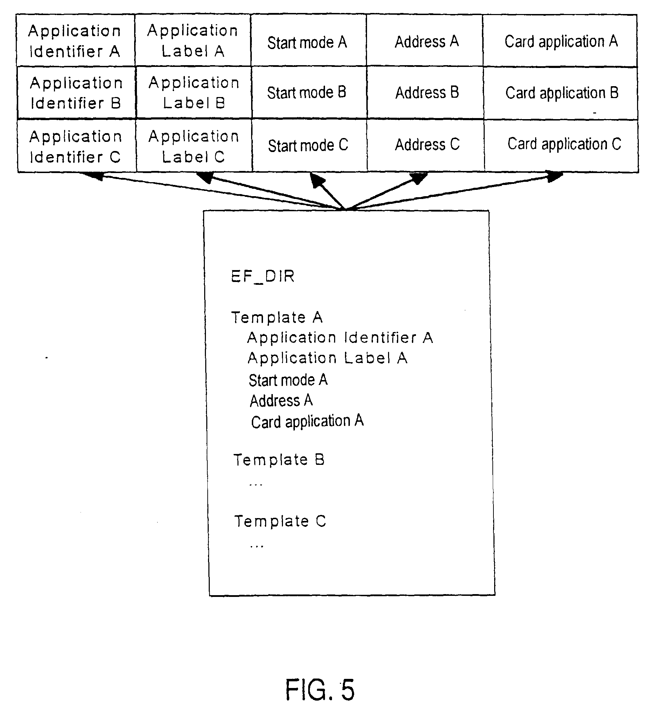

Figure 5 shows the representation of the card configuration on a file oriented smart card in accordance with a third preferred embodiment of the invention presented.

In it, the card configuration is completely located in a single file on the smart card. Files and data structures are shown as in the first embodiment in accordance with ISO 8825.

The way in which the card configuration is placed on the smart card is not restricted to the three embodiments described above. Files and data can also be written in other forms.

In one embodiment of the invention presented, the contents of the card configuration are distributed to several locations. In this way, there are at least the application identifier of the data or Java applets used by a card application and the control information for the start mode of this card application on the smart card, and they are read from there by the background program. At least one of the additional contents of the card configuration, such as the address, is located outside the smart card and is read by the background program from at least one configuration file which is located outside the smart card, such as on a local computer or on a remote computer, for example in a computer network such as the Internet.

In one embodiment of the invention, the background program is additionally used to start application programs even before the insertion of a smart card into the reader, where these programs can also be card applications. The start of these programs is carried out automatically or after the user has made a selection, according to certain information which is read for this purpose from the background program from user-defined or other files. The programs are loaded previously from addresses which result from the information read. In this way, the user-defined or other files are not located on the smart card but are, for example, located in local or remote computers.

If the card application uses security-relevant data such as personal notes, financial transaction data, etc. then, before the start of a card application, and through the background program, a security question can be executed before start of the card application, such as asking for a password or a personal identification number (PIN). For example, a secure connection to a computer in the Internet can be created automatically as soon as a corresponding smart card is inserted into the reader and the PIN is entered.

In one special embodiment of the invention presented, the card application is stopped automatically if the smart card is removed from the reader. This can be the case, for example, in using a "cash card" type smart card. Here a "cash card" card application is started automatically as soon as the corresponding smart card is inserted into a reader and the start mode of the card application is AUTOSTART. The card application is ended automatically as soon as the cash card is removed from the reader, which reduces the possibility of outside manipulation of the data and contributes to an improvement in data security.

The invention presented can obviously also be applied if several card applications are simultaneously supported by one smart card.

Then there are several data sets in the card configuration with the respective contents of application identifier, control information, application label, address and name of the card application to be started. It is then advisable to allocate an AUTOSTART start mode to only one card application so that a clear operation of the card application remains possible at the terminal.

An embodiment of the invention presented intends that the card applications are themselves stored in the smart card.

Instead of a smart card, other devices such as mobile telephones or computers can be used with the invention presented. The transmission of data between such a device and the terminal can be carried out in a contactless manner, for example. Even contactless reading of a smart card by a contactless reader is applicable in the invention presented.

## Claims

1. Smart card with stored information, which is used in executing a computer program outside the smart card (card application), characterised in that
the stored information contains control information for the start mode of the card application.

2. Smart card according to claim 1, characterised in that the stored information contains the name of the information which can be used by the card application.

3. Smart card according to claims 1 or 2, characterised in that the stored information contains a statement on which card application is to be executed.

4. Smart card according to one of the claims 1, 2 or 3, characterised in that the stored information contains a statement on the address from which the card application is to be loaded.

5. Smart card according to claim 4, characterised in that the address is an Internet address.

6. Smart card according to one of the previous claims, characterised in that the stored information is computer programs.

7. Smart card according to claim 6, characterised in that the computer programs are Java applets.

8. Procedure for operating a computer program (card application) which, in its execution, processes information which is stored on a smart card, characterised in that before the execution of the card application by the smart card, control information for the start mode of the card application is read and the card application is started according to the control information.

9. Procedure according to claim 8, characterised in that the card application is started automatically.

10. Procedure according to claims 8 or 9, characterised in that before the execution of the card application by the smart card, a statement is read on which card application is to be executed, and the card application corresponding to this statement is executed.

11. Procedure according to claims 8, 9 or 10, characterised in that before the execution of the card application by the smart card, a statement on the address from which the card application is loaded is read and the card application is loaded from this address.

12. Procedure according to one of the claims 8 to 11, characterised in that the reading of information from the smart card before the execution of the card application as well as the loading and starting of the card application is carried out by a computer program.

13. Procedure according to one of the claims 8 to 12, characterised in that the card application is executed in a personal computer.
